# EUROPEAN PATENT SPECIFICATION

(11) **EP 2 721 987 B1**
(45) Date of publication and mention of the grant of the patent: **07.12.2016**
(21) Application number: 13189162.4
(22) Date of filing: 17.10.2013
(51) Int. Cl.: A47L 9/28, A47L 9/04

(54) **Method of controlling automatic cleaner**
Steuerverfahren für einen automatischen Reiniger
Procédé de commande d'un aspirateur

(30) Priority: 18.10.2012 KR 20120115951
(43) Date of publication of application: 23.04.2014
(73) Proprietor: LG Electronics Inc., Yeongdeungpo-gu Seoul 07336 (KR)
(72) Inventor: Jang, Jaewon, 153-802 Seoul (KR); Choi, Joonsik, 153-802 Seoul (KR)
(74) Representative: Ter Meer Steinmeister & Partner

(56) References cited:
- JP-A- H04 328 607
- KR-A- 20070 107 956
- US-A- 5 720 077
- US-A1- 2006 010 638
- US-A1- 2012 169 497

## Description

### BACKGROUND

The present disclosure relates to an automatic cleaner and a method of controlling an automatic cleaner.

Cleaners may suction and remove a foreign substance from a cleaning surface. Recently, automatic cleaners have been introduced for performing a cleaning operation automatically. Automatic cleaners are moved by the driving force of a motor powered by a battery, to suction and remove a foreign substance from a floor or other target surface.

Generally, a moving device is installed on a casing defining an appearance of an automatic cleaner. The moving device moves the automatic cleaner in a predetermined direction to suction a foreign substance from a floor. To this end, a suction port is disposed in the bottom of the casing to suction a foreign substance from a floor. A main brush, which directly contacts a foreign substance to suction the foreign substance through the suction port, may be disposed within the suction port.

However, the automatic cleaner suctions only a foreign substance located in a region underneath the casing, specifically, underneath the suction port. Thus, it may be difficult to effectively clean a region outside the footprint of the suction port.

To address this issue, a side brush may be disposed on the bottom of the casing. At least one portion of the side brush extends outside the footprint of the casing.

The side brush rotates relative to the casing to move a foreign substance located outside the footprint of the casing, specifically, outside the footprint of the suction port, toward the suction port.

However, such automatic cleaners have the following limitations.

As described above, since a foreign substance located outside the footprint of the suction port can be suctioned through the suction port by means of rotation of the side brush, as the length of the side brush is increased, a cleaning area of the automatic cleaner is substantially increased. However, when the length of the side brush is increased, the side brush may be damaged while the automatic cleaner is in a cleaning operation or is stored. In addition, when the length of the side brush is increased, the automatic cleaner requires a large storage space. Thus, it may be inconvenient to store the automatic cleaner. US 2006/010638 A1 describes a cleaner. Only when a wall side and the vicinity of an obstacle are cleaned, a side brush is operated and the cleaning is carried out, and when any other place than the wall side and the vicinity of the obstacle is cleaned, the side brush is maintained in a stoppage state. A judgment processing portion detects based on a detection signal from an obstacle detecting portion that a cleaner is approaching a wall or an obstacle. In response to such detection, the judgment processing portion instructs a travel steering portion to carry out immediate rotation and change of a travel direction, or travel along a wall side. Also, the judgment processing portion instructs a side brush driving portion to drive a side brush only in the rotation and in the wall side travel, and to stop the side brush in straight advance travel.

US 2012/169497 A1 describes a debris monitoring system including a receptacle, a first and a second emitter, and a first receiver. The receptacle defines an opening to receive debris into the receptacle. The first and second emitter are each arranged to emit a signal across at least a portion of the opening. The first receiver is proximate to the first emitter to receive reflections of the signal emitted by the first emitter, and the first receiver is disposed toward the opening to receive an unreflected portion of the signal emitted by the second emitter across at least a portion of the opening.

### SUMMARY

The object is solved by the features of the independent claims.

Embodiments provide a method of controlling an automatic cleaner adapted for effectively cleaning a corner.

Preferably a method of controlling an automatic cleaner includes: moving the automatic cleaner with a side brush assembly in a first operation type; determining a corner during the movement of the automatic cleaner based on a signal from an obstacle sensor; changing the first operation type of the side brush assembly to a second operation type to clean the corner when the corner is sensed; determining whether the corner is cleaned; and returning the second operation type of the side brush assembly to the first operation type when the corner is cleaned.

Preferably a method of controlling an automatic cleaner includes: moving the automatic cleaner with a side brush assembly in a general mode; determining a corner
during the movement of the automatic cleaner based on a signal from an obstacle sensor; operating a side brush assembly in a corner cleaning mode when the corner is sensed, wherein the side brush assembly includes: a movable member movably provided on the automatic cleaner; and a brush rotatably connected to the movable member, wherein the movable member is in a first operation type in the general mode, and is changed to a second operation type in the corner cleaning mode.

The determining of the corner may comprise: determining whether a side wall or a side obstacle is sensed; and determining whether a front wall or a front obstacle is sensed.

The determining of the corner may comprise: determining whether the automatic cleaner performs a wall following movement; and determining whether a front wall or a front obstacle is sensed.

The side brush assembly comprises a movable member movably provided on a casing of the automatic cleaner; and a brush provided on the movable member.

Preferably, the first operation type of the side brush assembly comprises maintaining the movable member in a first position.

Preferably, the first operation type of the side brush assembly comprises maintaining the brush in a fixed or rotating state.

The second operation type of the side brush assembly may comprise moving the movable member from the first position to a second position and rotating the brush.

The second operation type of the side brush assembly may comprise moving the movable member to a second position and then reciprocating the movable member between the first and second positions; and rotating the brush.

Preferably, the determining of whether the corner is cleaned comprises at least one of: determining whether an operation type change time of the side brush assembly exceeds a reference time, determining whether the number of rotations of the brush exceeds a reference number after an operation type of the side brush assembly is changed, determining whether an operation time of a driving part that drives the brush exceeds a reference time, or determining when an operation type change number of the side brush assembly exceeds a reference number.

The determining of whether the corner is cleaned, comprises: sensing by a sensor the cleanliness of a floor, and/or sensing by another sensor an amount of dust suctioned through a suction port.

According to the invention, in the cleaning of the corner, the automatic cleaner is maintained at a fixed state.

Preferably, the movable member rotates or linearly moves to change the side brush assembly from the first position to the second position or from the first operation type to the second operation type.

In a preferred embodiment, an overlap area between the movable member and the casing when the side brush assembly is in the second operation type or in the second position is smaller than an overlap area between the movable member and the casing when the side brush assembly is in the first operation type or in the first position.

Preferably, when an operation type of the side brush assembly is changed, a rotation shaft of the brush is moved.

The method further comprises: determining whether the corner is cleaned.

Preferably, the determining of whether the corner is cleaned comprises at least one of: determining when an operation type change time of the side brush assembly exceeds a reference time, determining when the number of rotations of the brush exceeds a reference number after an operation type of the side brush assembly is changed, determining when an operation time of a driving part that drives the brush exceeds a reference time, or determining when an operation type change number of the side brush assembly exceeds a reference number.

In the determining of whether the corner is cleaned, a sensor senses the cleanliness of a floor, or a sensor senses an amount of dust suctioned through a suction port.

Preferably, there is provided an automatic cleaner including: a control part for entirely controlling the automatic cleaner; and an obstacle sensor for sensing an obstacle. The control part may control the moving device, the main driving member, the first driving part, and/or the second driving part, on the basis of information sensed by obstacle sensor.

Preferably, the automatic cleaner comprises a main driving part for driving the main brush; a suction device; a side brush assembly including a movable member movably provided on a casing of the automatic cleaner and a brush provided on the movable member; an obstacle sensor for sensing obstacles, and a controller for controlling a main driving part, the suction device and the side brush assembly, wherein the controller is adapted to detect a corner to control the side brush assembly in a corner cleaning mode or in a general mode.

The automatic cleaner may include a sensor for sensing the cleanliness of a floor, and/ or a sensor for sensing an amount of dust suctioned through a suction port.

The details of one or more embodiments are set forth in the accompanying drawings and the description below. Other features will be apparent from the description and drawings, and from the claims.

### BRIEF DESCRIPTION OF THE DRAWINGS

Fig. 1 is a bottom view illustrating an automatic cleaner according to a first embodiment.
Fig. 2 is a bottom view illustrating an operation of a side brush assembly according to the first embodiment.
Fig. 3 is a block diagram illustrating the automatic cleaner according to the first embodiment.
Fig. 4 is a flowchart illustrating a method of controlling the automatic cleaner according to the first embodiment.
Fig. 5 is a block diagram illustrating an automatic cleaner according to a second embodiment.
Fig. 6 is a block diagram illustrating an automatic cleaner according to a third embodiment.
Fig. 7 is a bottom view illustrating an automatic cleaner according to a fourth embodiment.

### DETAILED DESCRIPTION OF THE EMBODIMENTS

Hereinafter, exemplary embodiments will be described with reference to the accompanying drawings.

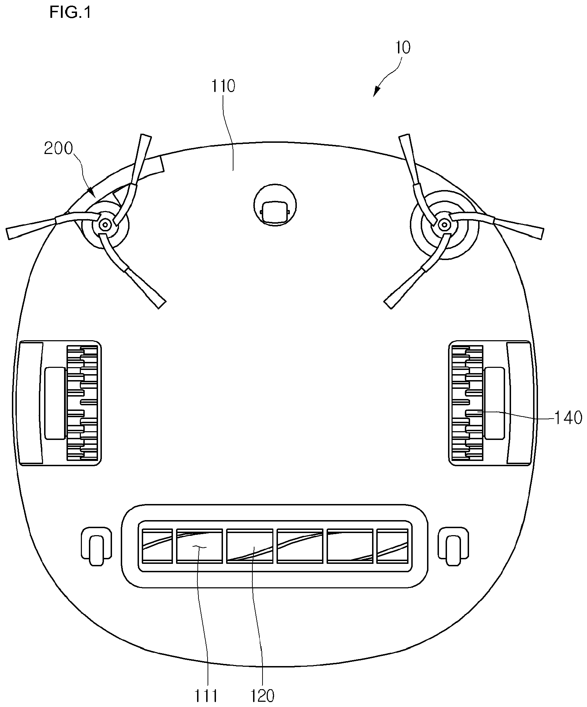

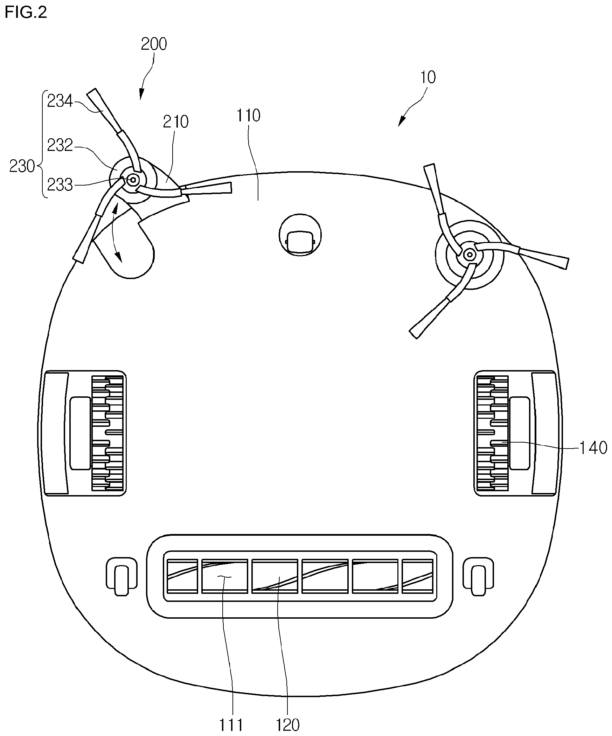

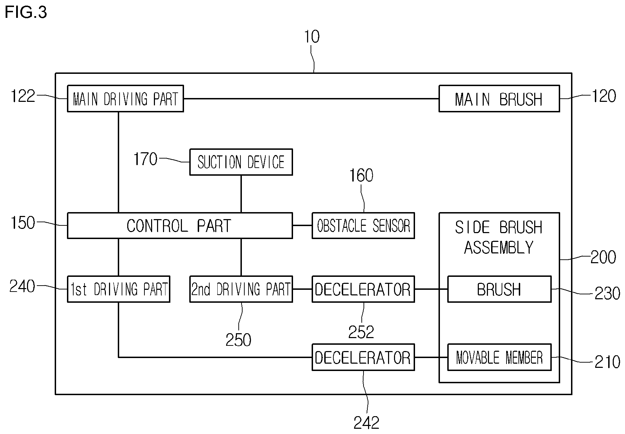

Fig. 1 is a bottom view illustrating an automatic cleaner according to a first embodiment. Fig. 2 is a bottom view illustrating an operation of a side brush assembly according to the first embodiment. Fig. 3 is a block diagram illustrating the automatic cleaner according to the first embodiment.

Referring to Figs. 1 to 3, an automatic cleaner 10 according to the first embodiment includes a casing 110 that defines an appearance of automatic cleaner 10. Casing 110 may have a flat polyhedral shape, but is not limited thereto.

Casing 110 may accommodate various components constituting automatic cleaner 10. For example, a suction device 170 for suctioning a foreign substance, and a collecting device (not shown) for collecting the suctioned foreign substance may be disposed within casing 110.

A suction port 111 is disposed in a bottom portion of casing 110. Suction port 111 functions as an inlet through which a foreign substance is suctioned into casing 110, particularly, into the collecting device by suction device 170. Suction port 111 may be formed by partially cutting out the bottom portion of casing 110 or by forming an opening into the bottom portion of the casing 111.

A main brush 120 is disposed inside of casing 110 on an area corresponding to suction port 111. Main brush 120 passes through suction port 111 to contact a foreign substance on a cleaning target surface (e.g., the floor) and remove the foreign substance. Main brush 120 is rotatably installed on casing 110. A main driving member 122 provides driving force for rotating main brush 120.

Casing 110 is provided with a moving device 140 for moving casing 110. Moving device 140 may include a driving motor (not shown) disposed within casing 110, and wheels, wherein at least one of the wheels is driven and rotated by the driving motor.

One or more side brush assemblies 200 are installed at the casing, preferably on the bottom of casing 110. In the first embodiment, two side brush assemblies 200 are provided on the casing 110.

Side brush assemblies 200 are movably installed on casing 110. Side brush assembly 200 may be located underneath or within the casing 110. Preferably a seating recess for accommodating the side brush assembly 200 is provided within the casing 111. Alternatively at least one portion of the side brush assembly 200 may be located underneath casing 110 and the rest thereof may be located outside the footprint of casing 110. For example, the side brush assembly 200 may be rotatable with respect to casing 110.

Side brush assemblies 200 are configured to transport a foreign substance located outside the footprint of suction port 111 in direction of the suction device 170. Thereby the suction device 170 suctions the foreign substance located outside the footprint of suction port 111 through suction port 111.

Side brush assembly 200 may include: a movable member 210 rotatably connected to casing 110 through a first rotation shaft (not shown); and a brush 230 rotatably connected to movable member 210 through a second rotation shaft 233.

A portion of movable member 210 may be located inside of casing 110, and be protruded out of casing 110 according to a rotation of movable member 210. That is, movable member 210 may be rotated when the movable member 210 overlaps casing 110 as shown in Fig. 1, so as not to protrude outside the footprint of casing 110. When movable member 210 is rotated to protrude outside the footprint of casing 110, a vertical overlap area between the movable member 210 and the casing 110 is smaller than a vertical overlap between the casing 110 and the movable member 210 if the movable member does not protrude outside the footprint of casing 110.

In another example, movable member 210 may be entirely located outside casing 110 (at the lower side of casing 110). In this state, when movable member 210 is rotated, a portion of movable member 210 may protrude out of a side of casing 110.

When movable member 210 is disposed within casing 110, brush 230 is located outside and/or underneath the casing 110 so that brush 230 can be rotated. That is, if the movable member 210 is located inside the casing or underneath the casing, the brush can freely rotate.

Brush 230 may include a brush holder 232 and a plurality of bristles 234 disposed on brush holder 232. The bristles 234 or brush bundles are spaced apart from each other so that a certain space or angle is provided there between. In a preferred embodiment there are two bristles 234 arranged at an angle of 180° on the brush holder. In the embodiment as shown in fig. 1, the bristles 234 are spaced apart by an angle of 120° from each other. In an example not shown four bristles 234 are provided each at an angle of 90° respectively. By providing bristles 234 or brush bundles having a certain distance or angle between each other, the cleaning performance is increased compared to conventional brushes having a no distance between each other or having a circular brush.

Automatic cleaner 10 may include: a first driving part 240 that generates power for rotating movable member 210; and a decelerator 242 (a transmission part) that transmits power from first driving part 240 to movable member 210. Decelerator 242 may include one or more gears, or one or more gears and a belt, but is not limited thereto.

Automatic cleaner 10 may include: a second driving part 250 for rotating brush 230; and a decelerator 252 (a transmission part) for transmitting power from second driving part 250 to brush 230. Decelerator 252 may include one or more gears, or one or more gears and a belt, but is not limited thereto. That is, brush 230 and movable member 210 may be driven by separate driving parts, respectively. Both the first and/or second driving part 240, 250 may be realized as stepper motor to provide low speed rates to the movable member 210 and/or the brush 230.

First driving part 240 may be provided on casing 110 or movable member 210. Second driving part 250 may be provided on casing 110 or movable member 210.

Decelerator 242 may be entirely provided on casing 110 or movable member 210. Alternatively, a portion of decelerator 242 may be provided on casing 110, and the rest thereof may be provided on movable member 210.

Decelerator 252 may be provided on movable member 210. Alternatively, a portion of decelerator 252 may be provided on casing 110, and the rest thereof may be provided on movable member 210.

Automatic cleaner 10 may include: a control part 150 for entirely controlling automatic cleaner 10; and an obstacle sensor 160 for sensing an obstacle. Control part 150 may control moving device 140, main driving member 122, first driving part 240, and/or second driving part 250, on the basis of information sensed by obstacle sensor 160.

Particularly, control part 150 may recognize a corner on the basis of information sensed by obstacle sensor 160, thereby controlling driving of first driving part 240.
Obstacle sensor 160 may include an infrared sensor, an ultrasonic sensor, or an optical sensor. However, the type of obstacle sensor 160 is not specifically limited, and obstacle sensor 160 may be provided in plurality. Since obstacle sensor 160 is a well-known technology, a description thereof will be omitted.

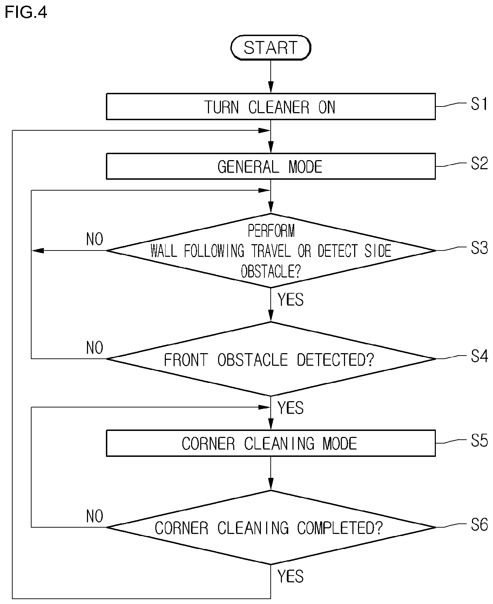

Fig. 4 is a flowchart illustrating a method of controlling an automatic cleaner according to the first embodiment.

Referring to Figs. 1 to 4, automatic cleaner 10 is turned on to clean a cleaning target surface (e.g., a floor) in operation S1.

In operation S2, automatic cleaner 10 may be automatically operated in a general mode or be operated in the general mode by inputting a start command. In the general mode of automatic cleaner 10, when automatic cleaner 10 is moved by moving device 140, the cleaning may be performed by main brush 120.

Second driving part 250 may be operated in the general mode to rotate brush 230 in a state where movable member 210 is stopped. This increases the cleaning area during general mode. Alternatively, in the general mode, first and second driving parts 240 and 250 may not be operated.

In operations S3 and S4, when automatic cleaner 10 is operated in the general mode, control part 150 determines whether a corner is recognized. Particularly, in operation S3, control part 150 determines whether automatic cleaner 10 performs wall following movement (detects a wall) or a side obstacle is detected. The wall following movement represents that automatic cleaner 10 moves along a wall.

Whether the wall following movement is performed or the side obstacle is detected may be determined on the basis of information sensed by obstacle sensor 160.

If it is determined that automatic cleaner 10 performs the wall following movement or the side obstacle is detected, control part 150 determines whether a front obstacle (or a front wall) is detected in operation S4. Since a corner generally corresponds to a region at which a plurality of surfaces (which are not limited to planes) meet each other, when a wall or side surface and a front surface are detected, control part 150 may determine that a corner is detected.

If it is determined that a corner is detected in operations S3 and S4, control part 150 controls automatic cleaner 10 to perform a corner cleaning mode in operation S5.

In the corner cleaning mode, control part 150 turns first driving part 240 on. When first driving part 240 is turned on, movable member 210 is rotated from the state of Fig. 1 (a first position) to the state of Fig. 2 (a second position). In the state where movable member 210 is rotated at a predetermined angle, first driving part 240 is turned off.

The operation type of side brush assembly 200 (or movable member 210) in the general mode is referred to as a first operation type. The operation type (including a position and a motion pattern) of side brush assembly 200 (or movable member 210) in the corner cleaning mode may be referred to as a second operation type. In the corner cleaning mode, side brush assembly 200 is changed from the first operation type to the second operation type.

As described above, movable member 210 is not protruding outside the casing (in the first position) in the first operation type of side brush assembly 200. The movable member 210 is protruding and stopped (in the second position) in the second operation type of side brush assembly 200.

When movable member 210 is rotated to protrude out of a side of casing 110 in the corner cleaning mode, brush 230 of movable member 210 is adjacent to the corner, thus effectively cleaning the corner.

In another example, in the corner cleaning mode, the second operation type of side brush assembly 200 may include repeated movements of movable member 210 between the first and second positions. That is, movable member 210 may repeatedly move between the first and second positions. In this case, an operation in which first driving part 240 is turned on to operate in a direction and is then turned off, and an operation in which first driving part 240 is turned on to operate in the opposite direction and is turned off may be sequentially repeated.

Automatic cleaner 10 may include a plurality of sensing parts to move movable member 210 from the first position to the second position and then stop movable member 210, or to move movable member 210 from the second position to the first position and then stop movable member 210. For example, the sensing parts may include: a first sensing part for sensing a movement of movable member 210 to the first position; and a second sensing part for sensing a movement of movable member 210 to the second position.

Alternatively, one sensing part may be used to sense a rotation angle of movable member 210 or the number of rotations of first driving part 240, thereby individually sensing the first and second positions.
In the corner cleaning mode, moving device 140 may be maintained in a stop state.

In operation S6, control part 150 determines whether the corner is cleaned. For example it may be determined that the corner is cleaned, after the time period of the change of the operation type of side brush assembly 200 exceeds a reference time, or an operation type of side brush assembly 200 is changed, when the number of rotations of brush 230 (or second driving part 250) exceeds a reference number, or an operation time of second driving part 250 exceeds a reference time, or an operation type change number of side brush assembly 200 exceeds a reference number,

Alternatively, whether the corner is cleaned may be determined by a sensor for detecting a cleaned state. For example, whether the corner is cleaned may be determined on the basis of a corner image captured by a camera and/ or be determined on the basis of an amount of dust suctioned through suction port 111 which is detected using a sensor. In the present disclosure, a method of determining whether a corner is cleaned is not specifically limited.

If it is determined that the corner is cleaned in operation S6, automatic cleaner 10 is operated again in the general mode. That is, the second operation type of side brush assembly 200 is changed to the first operation type.

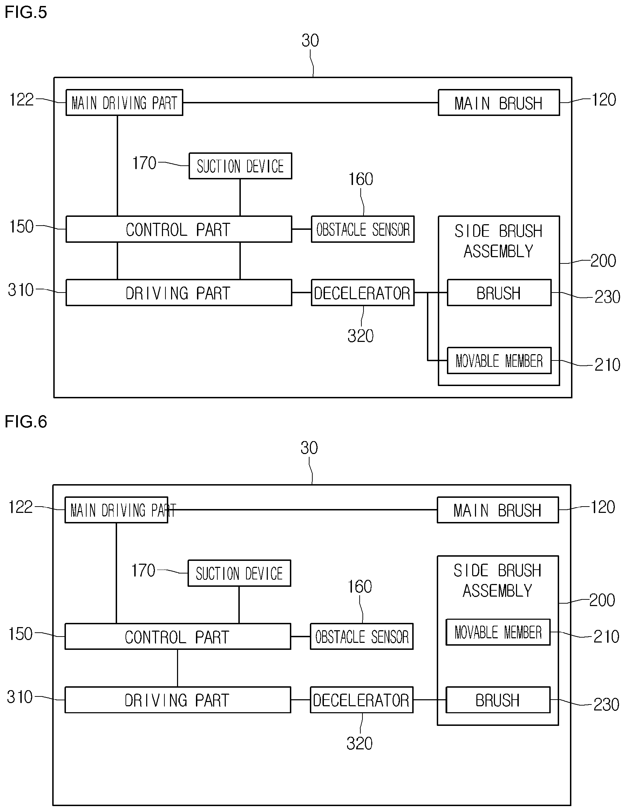

Fig. 5 is a block diagram illustrating an automatic cleaner according to a second embodiment.

The second embodiment is the same as the first embodiment except for a structure for operating a side brush assembly. Thus, a characterized part according to the second embodiment will be principally described.

Referring to Fig. 5, an automatic cleaner 30 according to the second embodiment may include: a driving part 310 that generates power for operating a side brush assembly 200; and a decelerator 320 (a transmission part) that transmits the power from driving part 310 to side brush assembly 200. Decelerator 320 may individually transmit power to a movable member 210 and a brush 230.

Since driving part 310 can operate movable member 210 and brush 230, manufacturing costs of automatic cleaner 30 are decreased, and the structure thereof is simplified.

In addition, since driving part 310 can operate movable member 210 and brush 230, movable member 210 can reciprocate between the first and second positions of the first embodiment.

In a general mode, driving part 310 is not operated to maintain stop states of movable member 210 and brush 230. In a corner cleaning mode, driving part 310 is operated to rotate brush 230 and reciprocate movable member 210 in a rotary motion within in a predetermined angle range.

To reciprocate movable member 210 in a rotary motion within a predetermined angle range, decelerator 320 may include a cam and a link connected to the cam.

Fig. 6 is a block diagram illustrating an automatic cleaner according to a third embodiment.

The third embodiment is the same as the first embodiment except for a structure for operating a side brush assembly. Thus, a characterized part according to the third embodiment will be principally described.

Referring to Fig. 6, an automatic cleaner 30 according to the third embodiment may include: a driving part 310 that generates power for operating a side brush assembly 200; and a decelerator 320 (a transmission part) that transmits power from driving part 310 to side brush assembly 200. Decelerator 320 may transmit torque to a brush 230, and transmit torque from brush 230 to movable member 210, thereby rotating movable member 210.

In a general mode, driving part 310 is not operated to maintain stop states of movable member 210 and brush 230. In a corner cleaning mode, driving part 310 is operated to rotate brush 230 and reciprocate movable member 210 in a rotary motion within in a predetermined angle range. To reciprocate movable member 210 in a rotary motion within in a predetermined angle range, decelerator 320 may include a cam and a link connected to the cam.

In another example, decelerator 320 may transmit power to movable member 210, and transmit torque from movable member 210 to brush 230.

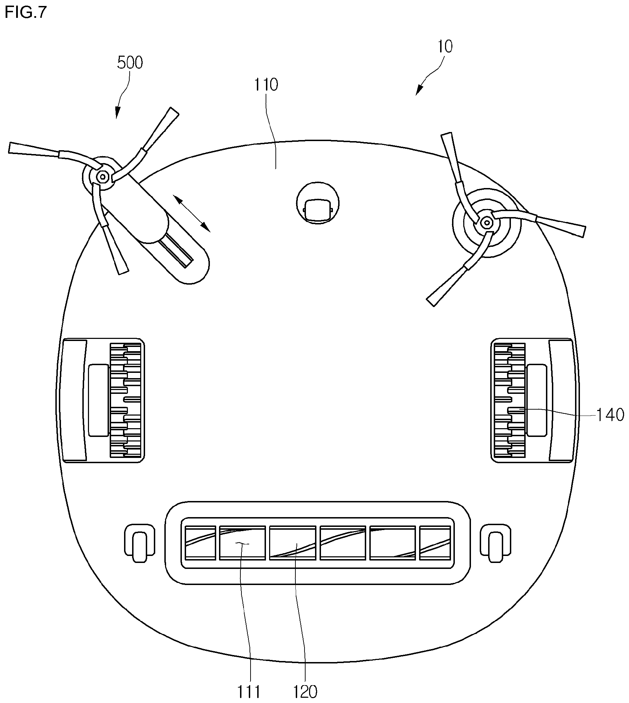

Fig. 7 is a bottom view illustrating an automatic cleaner according to a fourth embodiment.

The fourth embodiment is the same as the first embodiment except for a structure for operating a side brush assembly. Thus, a characterized part according to the fourth embodiment will be principally described.

Referring to Fig. 7, a side brush assembly 500 according to the fourth embodiment, i.e., a movable member may be linearly movable on a casing 110. For example, side brush assembly 500 may be linearly movable on casing 110 in a diagonal direction. In other words, the movable member may be linearly movable in a direction crossing a rotation shaft of a wheel constituting a moving device 140.

When the casing 110 has a circular shape, it may be difficult to efficiently clean an area located at approximately 45° of the center of casing 110. Since a corner of a cleaning region is located at approximately 45° of the center of casing 110, the movable member is moved in a line inclined at about 45° from the rotation shaft of the wheel constituting moving device 140, thereby effectively cleaning the corner. However, an angle between a moving path of the movable member and the wheel is not specifically limited.

Since the other components constituting side brush assembly 500 are the same as those of the first to fourth embodiments, a description thereof is omitted.

According to the embodiments, the operation type of the side brush assembly is changed during the cleaning of a corner to effectively clean the corner by the side brush assembly. Also, it can prevent the brush from being damaged, and the side brush assembly can be conveniently stored.

Although embodiments have been described with reference to a number of illustrative embodiments thereof, it should be understood that numerous other modifications and embodiments can be devised by those skilled in the art that will fall within the scope of the principles of this disclosure. More particularly, variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A method of controlling an automatic cleaner (10), comprising:
moving the automatic cleaner (10) with a side brush assembly (200) in a first operation type;
determining a corner during the movement of the automatic cleaner based on a signal from an obstacle sensor (160);
changing the first operation type of the side brush assembly (200) to a second operation type to clean (S5) the corner when the corner is determined;
determining (S6) whether the corner is cleaned; and
returning the second operation type of the side brush assembly (200) to the first operation type when the corner is cleaned,
**characterized in that**
during the cleaning of the corner, the automatic cleaner (10) is maintained at a fixed state.

2. The method of claim 1, wherein the determining of the corner comprises:
determining (S3) whether a side wall or a side obstacle is sensed; and
determining (S4) whether a front wall or a front obstacle is sensed.

3. The method of claim 1 or 2, wherein the determining of the corner comprises:
determining (S3) whether the automatic cleaner performs a wall following movement; and
determining (S4) whether a front wall or a front obstacle is sensed.

4. The method as claimed in any one of the preceding claims, wherein the side brush assembly (200) comprises:
a movable member (210) movably provided on a casing (110) of the automatic cleaner (10); and
a brush (230) provided on the movable member (210),
wherein the first operation type of the side brush assembly (200) comprises maintaining the movable member (210) in a first position.

5. The method as claimed in any one of the preceding claims, wherein the first operation type of the side brush assembly (200) comprises maintaining the brush (230) in a fixed or rotating state.

6. The method of claim 4 or 5, wherein the second operation type of the side brush assembly (200) comprises moving the movable member(210) from the first position to a second position and rotating the brush (230).

7. The method of claim 4 or 5, wherein the second operation type of the side brush assembly (200) comprises:
moving the movable member (210) to a second position and then reciprocating the movable member (210) between the first and second positions; and
rotating the brush (230).

8. The method of claim 1, wherein the side brush assembly (200) comprises:
a movable member (210) movably provided on a casing (110) of the automatic cleaner (10); and a brush (230) provided on the movable member, wherein the determining of whether the corner is cleaned comprises at least one of:
determining whether an operation type change time of the side brush assembly (200) exceeds a reference time,
determining whether the number of rotations of the brush (230) exceeds a reference number after an operation type of the side brush assembly (200) is changed,
determining whether an operation time of a driving part that drives the brush (230) exceeds a reference time, or
determining when an operation type change number of the side brush assembly (200) exceeds a reference number.

9. The method as claimed in any one of the preceding claims, wherein in the determining of whether the corner is cleaned,
a sensor senses the cleanliness of a floor, and/or
a sensor senses an amount of dust suctioned through a suction port (111).

10. The method as claimed in any one of the preceding claims, wherein the side brush assembly (200) comprises:
a movable member (210) movably provided on a casing of the automatic cleaner; and
a brush (230) provided on the movable member (210),
wherein the movable member (210) rotates or linearly moves to change the side brush assembly (200) from the first position to the second position or from the first operation type to the second operation type.

11. The method as claimed in any one of the preceding claims 4 -10, wherein an overlap area between the movable member (210) and the casing (110) when the side brush assembly (200) is in the second operation type or in the second position is smaller than an overlap area between the movable member (210) and the casing (110) when the side brush assembly (200) is in the first operation type or in the first position.

12. The method as claimed in any one of the preceding claims, wherein when an operation type of the side brush assembly (200) is changed, a rotation shaft (233) of the brush (230) is moved.

13. An automatic cleaner (10) comprising:
main driving part (122) for driving the main brush (120);
a suction device (170);
a side brush assembly (200) including a movable member (210) movably provided on a casing (110) of the automatic cleaner (10) and a brush (230) provided on the movable member (210);
an obstacle sensor (160) for sensing obstacles, and
a controller (150) for controlling a main driving part (122), the suction device and the side brush assembly (200), wherein the controller (150) is adapted to detect a corner and to control the automatic cleaner (10) in a corner cleaning mode based on a method of controlling an automatic cleaner (10) as defined in one of the claims 1-12.

14. The automatic cleaner (10) as claimed in claim 13, further comprising a sensor for sensing the cleanliness of a floor, and/ or a sensor for sensing an amount of dust suctioned through a suction port (111).

## Patentansprüche

1. Verfahren zum Steuern einer automatischen Reinigungsvorrichtung (10), das Folgendes umfasst:
Bewegen der automatischen Reinigungsvorrichtung (10) mit einer Seitenbürstenanordnung (200) in einer ersten Betriebsart;
Bestimmen einer Ecke während der Bewegung der automatischen Reinigungsvorrichtung auf der Basis eines Signals von einem Hindernissensor (160);
Ändern der ersten Betriebsart der Seitenbürstenanordnung (200) in eine zweite Betriebsart, um die Ecke zu reinigen (S5), wenn die Ecke bestimmt ist;
Bestimmen (S6), ob die Ecke gereinigt ist; und
Zurückstellen der zweiten Betriebsart der Seitenbürstenanordnung (200) auf die erste Betriebsart, wenn die Ecke gereinigt ist,
**dadurch gekennzeichnet, dass**
die automatische Reinigungsvorrichtung (10) während des Reinigens der Ecke in einem stationären Zustand gehalten wird.

2. Verfahren nach Anspruch 1, wobei das Bestimmen der Ecke Folgendes umfasst:
Bestimmen (S3), ob eine Seitenwand oder ein seitliches Hindernis erfasst werden; und
Bestimmen (S4), ob eine vordere Wand oder ein vorderes Hindernis erfasst werden.

3. Verfahren nach Anspruch 1 oder 2, wobei das Bestimmen der Ecke Folgendes umfasst:
Bestimmen (S3), ob die automatische Reinigungsvorrichtung eine einer Wand folgende Bewegung durchführt; und
Bestimmen (S4), ob eine vordere Wand oder ein vorderes Hindernis erfasst werden.

4. Verfahren nach einem der vorhergehenden Ansprüche, wobei die Seitenbürstenanordnung (200) Folgendes umfasst:
ein bewegliches Element (210), das auf einem Gehäuse (110) der automatischen Reinigungsvorrichtung (10) beweglich vorgesehen ist; und
eine Bürste (230), die auf dem beweglichen Element (210) vorgesehen ist,
wobei die erste Betriebsart der Seitenbürstenanordnung (200) das Halten des beweglichen Elements (210) in einer ersten Position umfasst.

5. Verfahren nach einem der vorhergehenden Ansprüche, wobei die erste Betriebsart der Seitenbürstenanordnung (200) das Halten der Bürste (230) in einem feststehenden oder in einem rotierenden Zustand umfasst.

6. Verfahren nach Anspruch 4 oder 5, wobei die zweite Betriebsart der Seitenbürstenanordnung (200) das Bewegen des beweglichen Elements (210) von der ersten Position in eine zweite Position und das Drehen der Bürste (230) umfasst.

7. Verfahren nach Anspruch 4 oder 5, wobei die zweite Betriebsart der Seitenbürstenanordnung (200) Folgendes umfasst:
Bewegen des beweglichen Elements (210) in eine zweite Position und darauffolgend Hin- und Herbewegen des beweglichen Elements (210) zwischen der ersten und der zweiten Position; und
Drehen der Bürste (230).

8. Verfahren nach Anspruch 1, wobei die Seitenbürstenanordnung (200) Folgendes umfasst:
ein bewegliches Element (210), das auf einem Gehäuse (110) der automatischen Reinigungsvorrichtung (10) beweglich vorgesehen ist und eine Bürste (230), die auf dem beweglichen Element vorgesehen ist, wobei das Bestimmen, ob die Ecke gereinigt ist, zumindest einen der folgenden Schritte umfasst:
Bestimmen, ob eine Betriebsartänderungszeit der Seitenbürstenanordnung (200) eine Referenzzeit überschreitet,
Bestimmen, ob die Anzahl der Drehungen der Bürste (230) eine Referenzanzahl überschreitet, nachdem eine Betriebsart der Seitenbürstenanordnung (200) geändert ist,
Bestimmen, ob eine Betriebsdauer einer Antriebskomponente, die die Bürste (230) antreibt, eine Referenzzeit überschreitet, oder
Bestimmen, ob eine Anzahl von Änderungen der Betriebsart der Seitenbürstenanordnung (200) eine Referenzanzahl überschreitet.

9. Verfahren nach einem der vorhergehenden Ansprüche, wobei zum Bestimmen, ob die Ecke gereinigt ist,
ein Sensor die Sauberkeit eines Bodens erfasst und/oder
ein Sensor eine Staubmenge erfasst, die durch eine Saugöffnung (111) gesaugt wird.

10. Verfahren nach einem der vorhergehenden Ansprüche, wobei die Seitenbürstenanordnung (200) Folgendes umfasst:
ein bewegliches Element (210), das auf einem Gehäuse der automatischen Reinigungsvorrichtung beweglich vorgesehen ist; und
ein Bürste (230), die auf dem beweglichen Element (210) vorgesehen ist,
wobei sich das bewegliche Element (210) dreht oder sich linear bewegt, um die Seitenbürstenanordnung (200) von der ersten Position in die zweite Position oder von der ersten Betriebsart in die zweite Betriebsart zu verändern.

11. Verfahren nach einem der vorhergehenden Ansprüche 4-10, wobei ein Überlappungsbereich zwischen dem beweglichen Element (210) und dem Gehäuse (110), wenn sich die Seitenbürstenanordnung (200) in der zweiten Betriebsart oder in der zweiten Position befindet, kleiner als ein Überlappungsbereich zwischen dem beweglichen Element (210) und dem Gehäuse (110), wenn sich die Seitenbürstenanordnung (200) in der ersten Betriebsart oder in der ersten Position befindet, ist.

12. Verfahren nach einem der vorhergehenden Ansprüche, wobei eine Rotationswelle (233) der Bürste (230) bewegt wird, wenn eine Betriebsart der Seitenbürstenanordnung (200) geändert wird.

13. Automatische Reinigungsvorrichtung (10), die Folgendes umfasst:
eine Hauptantriebskomponente (122) zum Antreiben der Hauptbürste (120);
eine Saugvorrichtung (170);
eine Seitenbürstenanordnung (200), die ein bewegliches Element (210), das auf einem Gehäuse (110) der automatischen Reinigungsvorrichtung (10) beweglich vorgesehen ist, und eine Bürste (230), die auf dem beweglichen Element (210) vorgesehen ist, enthält;
einen Hindernissensor (160) zum Erfassen von Hindernissen; und
eine Steuereinrichtung (150) zum Steuern einer Hauptantriebskomponente (122), der Saugvorrichtung und der Seitenbürstenanordnung (200), wobei die Steuereinrichtung (150) ausgelegt ist, eine Ecke zu detektieren und die automatische Reinigungsvorrichtung (10) auf der Basis eines Verfahrens zum Steuern einer automatischen Reinigungsvorrichtung (10) wie in einem der Ansprüche 1-12 definiert in einem Eckenreinigungsmodus zu steuern.

14. Automatische Reinigungsvorrichtung (10) nach Anspruch 13, die ferner einen Sensor zum Erfassen der Sauberkeit eines Bodens und/oder einen Sensor zum Erfassen einer Staubmenge, die durch eine Saugöffnung (111) gesaugt wird, umfasst.

## Revendications

1. Procédé de commande d'un aspirateur automatique (10), comprenant :
le déplacement de l'aspirateur automatique (10) avec un assemblage de brosse latéral (200) dans un premier type de fonctionnement ;
la détermination d'un coin au cours du déplacement de l'aspirateur automatique sur la base d'un signal provenant d'un détecteur d'obstacle (160) ;
le changement du premier type de fonctionnement de l'assemblage de brosse latéral (200) à un deuxième type de fonctionnement pour nettoyer (S5) le coin lorsque le coin est déterminé ;
la détermination (S6) si le coin est nettoyé ; et
le retour du deuxième type de fonctionnement de l'assemblage de brosse latéral (200) au premier type de fonctionnement lorsque le coin est nettoyé,
**caractérisé en ce que**
au cours du nettoyage du coin, l'aspirateur automatique (10) est maintenu dans un état fixe.

2. Procédé selon la revendication 1, dans lequel la détermination du coin comprend :
la détermination (S3) si une paroi latérale ou un obstacle latéral est détecté ; et
la détermination (S4) si une paroi frontale ou un obstacle frontal est détecté.

3. Procédé selon la revendication 1 ou 2, dans lequel la détermination du coin comprend :
la détermination (S3) si l'aspirateur automatique effectue un déplacement de suivi de paroi ; et
la détermination (S4) si une paroi frontale ou un obstacle frontal est détecté.

4. Procédé selon l'une quelconque des revendications précédentes, dans lequel l'assemblage de brosse latéral (200) comprend :
un organe mobile (210) prévu, de manière à pouvoir se déplacer, sur un carter (110) de l'aspirateur automatique (10) ; et
une brosse (230) prévue sur l'organe mobile (210),
dans lequel le premier type de fonctionnement de l'assemblage de brosse latéral (200) comprend le maintien de l'organe mobile (210) à une première position.

5. Procédé selon l'une quelconque des revendications précédentes, dans lequel le premier type de fonctionnement de l'assemblage de brosse latéral (200) comprend le maintien de la brosse (230) dans un état fixe ou rotatif.

6. Procédé selon la revendication 4 ou 5, dans lequel le deuxième type de fonctionnement de l'assemblage de brosse latéral (200) comprend le déplacement de l'organe mobile (210) de la première position à une deuxième position et la rotation de la brosse (230).

7. Procédé selon la revendication 4 ou 5, dans lequel le deuxième type de fonctionnement de l'assemblage de brosse latéral (200) comprend :
le déplacement de l'organe mobile (210) à une deuxième position, puis le déplacement en va-et-vient de l'organe mobile (210) entre les première et deuxième positions ; et
la rotation de la brosse (230).

8. Procédé selon la revendication 1, dans lequel l'assemblage de brosse latéral (200) comprend :
un organe mobile (210) prévu, de manière à pouvoir se déplacer, sur un carter (110) de l'aspirateur automatique (10) ; et une brosse (230) prévue sur l'organe mobile, dans lequel la détermination si le coin est nettoyé comprend au moins l'une de :
la détermination si un temps de changement de type de fonctionnement de l'assemblage de brosse latéral (200) dépasse un temps de référence,
la détermination si le nombre de rotations de la brosse (230) dépasse un nombre de référence après un changement d'un type de fonctionnement de l'assemblage de brosse latéral (200),
la détermination si un temps de fonctionnement d'une partie d'entraînement qui entraîne la brosse (230) dépasse un temps de référence, ou
la détermination quand un nombre de changements de type de fonctionnement de l'assemblage de brosse latéral (200) dépasse un nombre de référence.

9. Procédé selon l'une quelconque des revendications précédentes, dans lequel, dans la détermination si le coin est nettoyé,
un détecteur détecte la propreté d'un sol, et/ou
un détecteur détecte une quantité de poussières aspirées à travers un orifice d'aspiration (111).

10. Procédé selon l'une quelconque des revendications précédentes, dans lequel l'assemblage de brosse latéral (200) comprend :
un organe mobile (210) prévu, de manière à pouvoir se déplacer, sur un carter de l'aspirateur automatique ; et
une brosse (230) prévue sur l'organe mobile (210),
dans lequel l'organe mobile (210) tourne ou se déplace linéairement pour changer l'assemblage de brosse latéral (200) de la première position à la deuxième position ou du premier type de fonctionnement au deuxième type de fonctionnement.

11. Procédé selon l'une quelconque des revendications 4 à 10, dans lequel une zone de chevauchement entre l'organe mobile (210) et le carter (110) lorsque l'assemblage de brosse latéral (200) est dans le deuxième type de fonctionnement ou à la deuxième position est plus petite qu'une zone de chevauchement entre l'organe mobile (210) et le carter (110) lorsque l'assemblage de brosse latéral (200) est dans le premier type de fonctionnement ou à la première position.

12. Procédé selon l'une quelconque des revendications précédentes, dans lequel, lorsqu'un type de fonctionnement de l'assemblage de brosse latéral (200) est changé, un arbre de rotation (233) de la brosse (230) est déplacé.

13. Aspirateur automatique (10) comprenant :
une partie principale d'entraînement (122) pour entraîner la brosse principale (120) ;
un dispositif d'aspiration (170) ;
un assemblage de brosse latéral (200) comprenant un organe mobile (210) prévu, de manière à pouvoir se déplacer, sur un carter (110) de l'aspirateur automatique (10) et une brosse (230) prévue sur l'organe mobile (210) ;
un détecteur d'obstacle (160) pour détecter des obstacles, et
un organe de commande (150) pour commander une partie principale d'entraînement (122), le dispositif d'aspiration et l'assemblage de brosse latéral (200), dans lequel l'organe de commande (150) est apte à détecter un coin et à commander l'aspirateur automatique (10) dans un mode de nettoyage de coin sur la base d'un procédé de commande d'un aspirateur automatique (10) selon l'une quelconque des revendications 1 à 12.

14. Aspirateur automatique (10) selon la revendication 13, comprenant en outre un détecteur pour détecter la propreté d'un sol et/ou un détecteur pour détecter une quantité de poussières aspirées à travers un orifice d'aspiration (111).
